# FASCICULE DE BREVET EUROPEEN

(11) **EP 3 676 115 B1**
(45) Date de publication et mention de la délivrance du brevet: **19.04.2023**
(21) Numéro de dépôt: 18766311.7
(22) Date de dépôt: 27.07.2018
(51) Int. Cl.: B60G 21/05

(54) **VÉHICULE COMPORTANT UN TRAIN ARRIÈRE À DÉPLACEMENT LONGITUDINAL CONTRÔLÉ EN CAS DE CHOC ARRIÈRE**
FAHRZEUG MIT EINEM HINTEREN RADSATZ MIT GESTEUERTER LÄNGSVERSCHIEBUNG IM FALLE EINES HECKAUFPRALLS
VEHICLE COMPRISING A REAR WHEELSET WITH CONTROLLED LONGITUDINAL DISPLACEMENT IN THE EVENT OF A REAR IMPACT

(30) Priorité: 31.08.2017 FR 1758026
(43) Date de publication de la demande: 08.07.2020
(73) Titulaire: PSA Automobiles SA, 78300 Poissy (FR)
(72) Inventeur: PERU, Marc, 92290 Chatenay Malabry (FR)
(86) Numéro de dépôt international: PCT/FR2018/051939
(87) Numéro de publication internationale: WO 2019/043309

(56) Documents cités:
- EP-A1- 0 968 854
- EP-A1- 1 721 762
- EP-A1- 2 883 754
- WO-A1-87/01078
- WO-A1-2015/107274
- KR-A- 20090 056 212
- KR-A- 20100 031 329
- KR-B1- 100 953 312

## Description

La présente invention concerne un véhicule qui comporte un châssis sur lequel est fixé un train arrière à traverse déformable. Elle concerne plus principalement un tel train arrière qui comporte de chaque côté de la traverse déformable un bras de suspension longitudinal du type comportant, en partie arrière, un moyeu de roue et, en partie avant, une articulation. L'articulation permet de solidariser la partie avant du bras de suspension sur le châssis. Le châssis comporte un élément de structure positionné dans le prolongement avant du bras de suspension et adapté pour s'étendre en vis-à-vis et limiter le déplacement longitudinal de la partie avant du bras de suspension. Un tel déplacement longitudinal se produisant lors d'un choc sur l'arrière du véhicule qui entraîne la rupture de l'articulation.

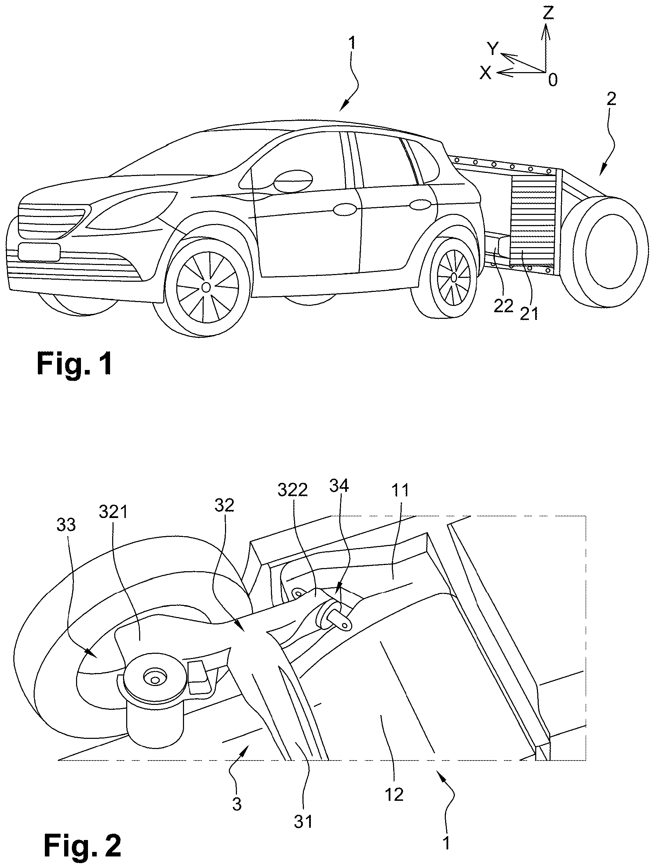

Certaines règlementations nationales qui concernent la sécurité des véhicules, posent des conditions de résistance des véhicules à une série de chocs. C'est notamment le cas des chocs arrière à grande vitesses (de l'ordre de 80 km/h) aux États-Unis d'Amérique. Pour le choc arrière, cette règlementation est la plus sévère au monde et ce compose, telle que figurée sur la figure 1, d'un véhicule 1 qui est immobilisé et contre lequel est propulsé, suivant une direction longitudinales X du véhicule 1, une barrière 2. La barrière 2 comporte un corps principal 21 en partie déformable et une partie proéminente 22 qui simule un pare-chocs et qui est extrêmement rigide. Sur cette figure, l'axe Y représente une direction transversale du véhicule 1 et l'axe Z une direction verticale du véhicule 1. Sur la figure 2 est représentée une vue partielle, de dessous, d'une partie arrière latérale du châssis 11 du véhicule 1 selon l'état de la technique. Sur la partie arrière du châssis 11 est fixé un train arrière 3 à traverse déformable 31 qui comporte de chaque côté de la traverse déformable 31 un bras de suspension longitudinal 32. Le bras de suspension 32 est du type comportant, en partie arrière 321, un moyeu de roue 33 et, en partie avant 322, une articulation 34. L'articulation 34 permet de solidariser la partie avant 322 du bras de suspension 32 sur le châssis 11. Le pare-chocs 22 de la barrière 2 en percutant l'arrière du véhicule 1 lors du choc à haute vitesse, vient taper dans la partie arrière 321 du bras de suspension 32, le poussant vers l'avant du véhicule 1 et créant une rupture de l'articulation 34. Le train arrière 3 ainsi poussé vers l'avant, fait que la traverse déformable 31 vient percuter un réservoir à essence 12 qui est positionné juste devant.

Les documents WO87/01078 et KR20090056212 décrivent des conceptions particulières de la liaison entre un train arrière et une structure de véhicule.

Le document KR 10-2010-0031329 A divulgue un véhicule selon le préambule de la revendication 1.

Selon le document FR2314080 il est connu d'avoir un train arrière qui est disposé de manière que, lors d'un tel choc arrière, une partie du choc soit retransmise au bras de suspension et a un cardan de transmission, limitant l'avancement d'un pont rigide, qui de manière semblable à une traverse déformable, pourrait venir percuter le réservoir d'essence. Mais pour ce faire, l'articulation avant du bras de suspension est particulièrement rigide et la présence du cardan de transmission permet de créer une autre voie d'effort. Une telle articulation rigide n'est pas compatible avec les exigences actuelles en terme, notamment, de filtration vibratoires, faisant que cette solution n'est plus acceptable aujourd'hui. De plus, renforcer ainsi un train arrière à traverse déformable fait qu'il n'est plus adapté à des véhicules petits et légers, créant un surpoids et augmentant de manière significative le volume occupé par un tel train arrière. Une telle solution de renforcement à la fois des bras de suspensions et des articulations et de la partie arrière de la structure du véhicule sur laquelle est fixée l'articulation, n'est pas une solution souhaitable.

La présente invention a pour objectif de pallier ces problèmes et de proposer un véhicule qui comporte un châssis sur lequel est fixé un train arrière à traverse déformable, le train arrière comportant de chaque côté de la traverse déformable un bras de suspension longitudinal du type comportant, en partie arrière, un moyeu de roue et, en partie avant, une articulation, ladite articulation permettant de solidariser la partie avant du bras de suspension sur le châssis, le châssis comportant un élément de structure positionné dans le prolongement avant du bras de suspension et adapté pour s'étendre en vis-à-vis et limiter le déplacement longitudinal (x) de la partie avant du bras de suspension, un tel déplacement longitudinal se produisant lors d'un choc sur l'arrière du véhicule qui entraîne la rupture de l'articulation. Un tel véhicule est tel qu'il comporte des moyens de blocage adaptés pour bloquer le déplacement transversal (y) de la partie avant du bras de suspension lors du choc.

Selon l'invention, les moyens de blocage comportent une extrémité saillante portée par une partie avant du bras de suspension, ladite extrémité saillante étant adaptée pour pénétrer dans un orifice correspondant d'un renfort porté par le châssis. Selon une première caractéristique de l'invention, l'extrémité saillante peut être formée par une tige métallique dont une extrémité avant est positionnée en saillie de l'extrémité avant du bras. L'élément de structure forme une partie du renfort. Selon l'invention, l'orifice est formé par une zone frangible dudit renfort.

Selon une deuxième caractéristique de l'invention, les moyens de blocage comportent des parois latérales adaptés pour former des surfaces d'appui latérales à la partie avant du bras de suspension lors dudit choc, lesdites parois latérales étant portées par le châssis ou par le renfort.

Selon une troisième caractéristique de l'invention, le renfort comporte une partie adaptée pour se déformer lors dudit choc, permettant à la partie avant du bras de suspension de conserver un déplacement longitudinal (x) pour amortir progressivement l'énergie due au choc. Les parties affaiblies peuvent comporter des ouvertures ou des ondulations alignées selon la direction longitudinale (x) du véhicule.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
- Les figures 1 et 2 qui représentent un véhicule qui comporte un train arrière selon l'état de la technique ; et
- Les figures 4,6 et 9 représentent différentes vues d'un véhicule qui comporte des moyens de blocage d'un train arrière en cas de choc arrière, selon différents modes de réalisation de l'invention.

Dans la description détaillée de l'invention est utilisé un référentiel lié au sens normal de circulation d'un véhicule. Le terme avant désigne un positionnement vers l'avant du véhicule et le terme arrière désigne un positionnement vers l'arrière du véhicule. L'axe longitudinal (x) correspond à l'axe normal de circulation du véhicule et l'axe transversal (y) à un axe perpendiculaire à l'axe longitudinal compris dans le plan de déplacement du véhicule et l'axe vertical (Z) à un axe normal au plan de déplacement du véhicule, orienté vers le haut du véhicule.

Les figures 1 et 2 qui représentent un véhicule, selon l'état de la technique et ont déjà été décrites précédemment, les parties communes avec un véhicule selon l'invention reprennent les mêmes numérotations.

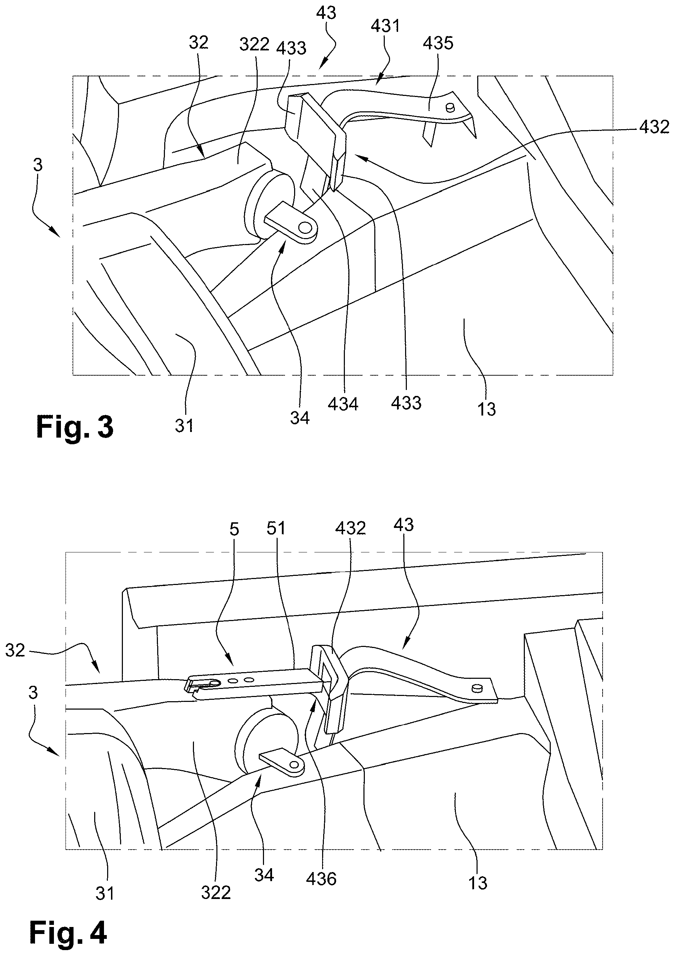

La figure 3 représente une vue d'un véhicule qui comporte un châssis 13 sur lequel est fixé un train arrière 3 à traverse déformable 31 et qui comporte de chaque côté de la traverse déformable 31 un bras de suspension longitudinal 32 du type comportant, en partie avant 322, une articulation 34. L'articulation 34 permet de solidariser la partie avant 322 du bras de suspension 32 sur le châssis 13. Le châssis 13 comporte un renfort 43 positionné dans le prolongement avant du bras de suspension 32 et adapté pour s'étendre en vis-à-vis et limiter le déplacement longitudinal de la partie avant 322 du bras de suspension 32. Le renfort 43 comporte une première pièce 431 qui est formée par une lame métallique, dont les deux extrémités sont solidarisées au châssis 13 et qui s'étend suivant l'axe longitudinal du véhicule, dans le prolongement avant du bras de suspension 32. Le renfort 43 comporte une seconde pièce 432 qui est positionnée en vis-à-vis de l'avant 322 du bras de suspension 32. La seconde pièce 432 du renfort 43 est positionné à la verticale avec deux bords latéralement 433 qui sont incurvés en direction de l'avant 322 du bras de suspension 32. La première pièce 431 du renfort 43 comporte une première partie 434 verticale qui forme un support pour la seconde pièce 432 du renfort 43. La première pièce 431 du renfort 43 comporte une seconde partie 435 qui s'étend selon l'axe longitudinal dans le prolongement du bras de suspension 32. La seconde partie 435 de la première pièce 431 est adaptée pour se déformer suivant ledit axe longitudinal lors d'un choc arrière se produisant au niveau de l'arrière du bras de suspension 32, faisant avancer le bras de suspension 32, en cassant l'articulation 34, contre le renfort 43. La déformation longitudinale de la seconde partie 435 de la première pièce 431 est adaptée pour absorber une partie de l'énergie due au choc, amortissant l'impact de l'avant 322 du bras de suspension 32 contre le renfort 43. Les bords latéraux 433 de la seconde pièce 432 sont adaptés pour bloquer latéralement l'avant 322 du bras de suspension 32 lors du choc.

La figure 4 représente une vue d'une partie du châssis 13 du véhicule sur lequel est fixé le train arrière 3 à traverse déformable 31. Selon une variante, le train arrière 3 comporte une tige métallique 5 dont une extrémité avant 51 est positionnée en saillie de l'extrémité avant 322 du bras 32. La tige métallique 5 est solidarisée par des moyens de vissage ou par des moyens de soudage à l'extrémité avant 322 du bras 32. La seconde pièce 432 du renfort 43 comporte un orifice 436. L'extrémité avant saillante 51 de la tige 5 est adaptée pour pénétrer dans l'orifice 436 de la seconde pièce 432 du renfort 43. L'ensemble forme des moyens de blocage permettant de renforcer le blocage latéralement de l'avant 322 du bras de suspension 32 lors du choc. L'orifice 436 de la seconde pièce 432 du renfort 43 peut aussi être formé par une zone frangible de la seconde pièce 432 du renfort 43. L'impact de l'extrémité avant saillante 51 de la tige 5 lors du choc, faisant suite à la casse de l'articulation 34, est suffisamment violent pour briser une telle zone frangible.

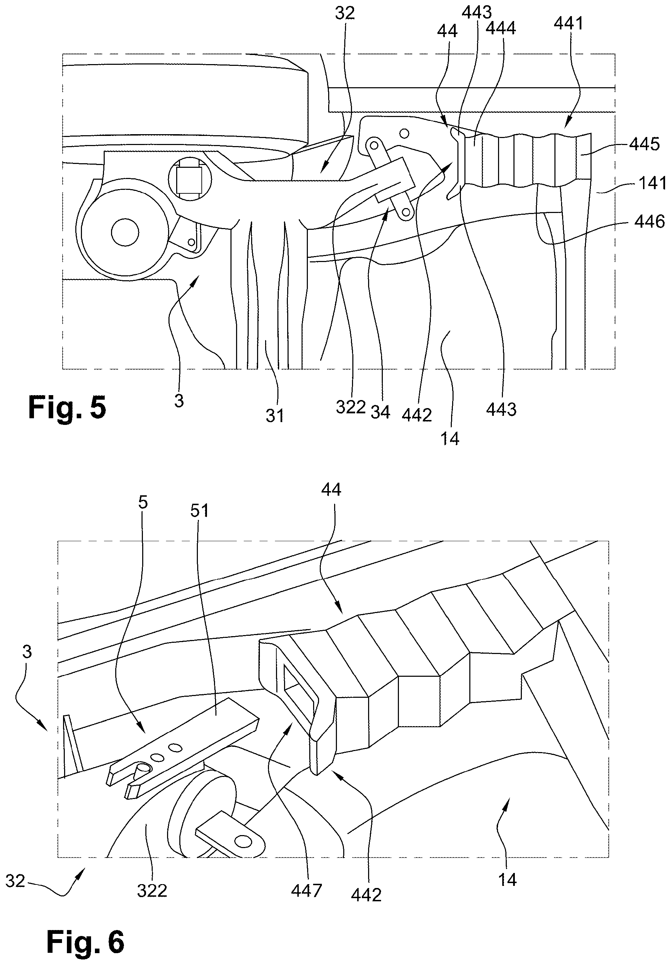

La figure 5 représente une vue d'un véhicule qui comporte un châssis 14 sur lequel est fixé, comme précédemment, un train arrière 3 à traverse déformable 31 et qui comporte de chaque côté de la traverse déformable 31 un bras de suspension longitudinal 32 du type comportant, en partie avant 322, une articulation 34. L'articulation 34 permet de solidariser la partie avant 322 du bras de suspension 32 sur le châssis 14. Le châssis 14 comporte un renfort 44 positionné dans le prolongement avant du bras de suspension 32 et adapté pour s'étendre en vis-à-vis et limiter le déplacement longitudinal de la partie avant 322 du bras de suspension 32. Le renfort 44 comporte une première pièce 441 qui est formée par une boite métallique, qui s'étend suivant l'axe longitudinal du véhicule, dans le prolongement avant du bras de suspension 32. Le renfort 44 comporte une seconde pièce 442 qui est positionnée en vis-à-vis de l'avant du bras de suspension 32. La seconde pièce 442 du renfort 44 est positionné à la verticale avec deux bords latéralement 443 qui sont incurvés en direction du bras de suspension 32. La première pièce 431 du renfort 43 comporte une partie avant 444 verticale qui forme un support pour la seconde pièce 442 du renfort 44. La première pièce 441 du renfort 44 comporte une extrémité avant 445 en appui contre une pièce de renfort transversale 141 du châssis 14. La première pièce 441 du renfort 44 est adaptée pour se déformer suivant l'axe longitudinal du véhicule lors d'un choc arrière se produisant au niveau de l'arrière du bras de suspension 32, faisant avancer le bras de suspension 32, en cassant l'articulation 34, contre le renfort 44. La déformation longitudinale de la première pièce 441 est adaptée pour absorber une partie de l'énergie due au choc, amortissant l'impact de l'avant 322 du bras de suspension 32 contre le renfort 44. Les bords latéraux 443 de la seconde pièce 442 sont adaptés pour bloquer latéralement l'avant 322 du bras de suspension 32 lors du choc. Les parois latérales de la première pièce 441 du renfort 44 comportent des ondulations verticales 446 alignées selon l'axe longitudinal du véhicule et permettant de fragiliser le renfort 44 pour qu'il puisse se compresser selon cet axe longitudinal lors du choc.

La figure 6 représente une vue d'une partie du châssis 14 du véhicule sur lequel est fixé le train arrière 3 à traverse déformable. Selon une même variante que celle présentée en figure 4, le train arrière 3 comporte une tige métallique 5 dont une extrémité avant 51 est positionnée en saillie de l'extrémité avant 322 du bras 32. La seconde pièce 442 du renfort 44 comporte un orifice 447. L'extrémité avant saillante 51 de la tige 5 est adaptée pour pénétrer dans l'orifice 447 de la seconde pièce 442 du renfort 44. L'ensemble forme des moyens de blocage permettant de renforcer le blocage latéralement de l'avant 322 du bras de suspension 32 lors du choc. De même que précédemment, l'orifice 447 de la seconde pièce 442 du renfort 44 peut aussi être formé par une zone frangible de la seconde pièce 442 du renfort 44. L'impact de l'extrémité avant saillante 51 de la tige 5 lors du choc, fait suite à la casse de l'articulation 34 et est suffisamment violent pour briser une telle zone frangible.

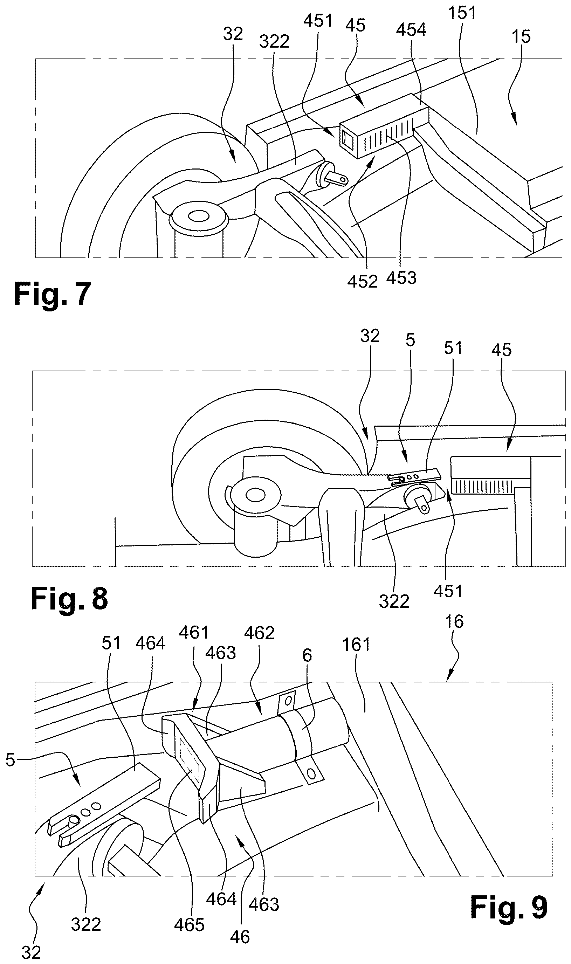

Les figures 7 à 8 représentent des vues de différents moyens de renfort, avec un train arrière 32 qui comporte ou pas une tige métallique 5 telle que décrite aux figures 4 et 6.

Sur la figure 7, un renfort 45 est formé par une unique partie constituée par une boite positionnée selon l'axe longitudinal, dans le prolongement avant de l'avant 322 du bras de suspension 32. Le renfort 45 comporte en vis-à-vis de l'avant 322 du bras de suspension 32 un renfoncement 451 dans lequel est destiné à venir en appui l'avant 322 du bras de suspension 32, le bloquant latéralement. Les parties latérales 452 du renfort 45 comportent une série d'ouvertures 453, fragilisant cette partie latérale 452 du renfort 45 pour induire une déformation selon l'axe longitudinal du renfort 45 lors du choc. Les ouvertures 453 peuvent être formées par des lignes verticales parallèles entre elles ou encore, des ouvertures circulaires alignées verticalement et s'étendant longitudinalement en rangées successives le long de la partie latérale 452 du renfort 45. La partie avant 454 du renfort 45 est en appui contre un renfort transversal 151 du châssis 15.

Sur la figure 8, l'avant 322 du train arrière 32 comporte une tige métallique 5 dont l'extrémité avant 51 est adaptée pour percer le renfoncement 451 du renfort 45 pour ancrer l'avant 322 du bras de suspension 32 dans le renfort 45 lors du choc.

Sur la figure 9, un renfort 46 est formé en deux pièces. La première pièce 461 est formée par une plaque verticale qui est positionnée en vis-à-vis de l'avant 322 du bras de suspension 32. La seconde pièce 462 est formée par un tube cylindrique qui se prolonge vers l'avant, selon l'axe longitudinal, de la première pièce 461 jusqu'à un renfort transversal 161 du châssis 16. Un collier 6 permet de maintenir en position l'avant du renfort 46 sur le châssis 16. La première pièce 461 comporte vers l'avant des parties obliques 463 qui forment des équerres et des bords latéraux 464 qui sont incurvés en direction de l'avant 332 du bras de suspension 32 pour bloquer latéralement l'avant 322 du bras de suspension 32 lors du choc. L'avant 322 du bras de suspension 32 comporte une tige métallique 5 dont l'extrémité avant 51 est en saillie de l'avant du bras de suspension 32 et est positionnée en vis-à-vis d'une partie centrale frangible 465 de la première pièce 461 du renfort 46.

Il va de soi que la présente invention n'est pas limitée aux modes de réalisation qui viennent d'être décrits et que diverses modifications et variantes simples peuvent être envisagées par l'homme du métier sans sortir du cadre de l'invention tel que définie par les revendications annexées. Le renfort peut présenter différentes forment, pouvant être des combinaisons des quelques exemples de formes qui ont été plus particulièrement décrites. La tige métallique peut aussi présenter d'autres formes, la seule limitation étant que son extrémité avant doit être en saillie de l'extrémité avant du bras de suspension pour permettre de former, avec la partie arrière du renfort qui est en vis-à-vis, des moyens de blocage de l'extrémité avant du bras de suspension lors d'un tel choc arrière.

## Revendications

1. Véhicule (1) comportant un châssis (13 ; 14 ; 15 ; 16) sur lequel est fixé un train arrière (3) à traverse déformable (31), le train arrière (3) comportant de chaque côté de la traverse déformable (31) un bras de suspension longitudinal (32) du type comportant, en partie arrière (321), un moyeu de roue (33) et, en partie avant (322), une articulation (34), ladite articulation (34) permettant de solidariser la partie avant (322) du bras de suspension (32) sur le châssis (13 ; 14 ; 15 ; 16), le châssis (13 ; 14 ; 15 ; 16) comportant un élément de structure positionné dans le prolongement avant du bras de suspension (32) et adapté pour s'étendre en vis-à-vis et limiter le déplacement longitudinal (x) de la partie avant (322) du bras de suspension (32), un tel déplacement longitudinal se produisant lors d'un choc sur l'arrière du véhicule (1) qui entraîne la rupture de ladite articulation (34), le véhicule (1) comportant en outre des moyens de blocage adaptés pour bloquer le déplacement transversal (y) de la partie avant (322) du bras de suspension (32) lors dudit choc, les moyens de blocage comportant une extrémité saillante (51) portée par une partie avant (322) du bras de suspension (32), ladite extrémité saillante (51) étant adaptée pour pénétrer dans un orifice (436) correspondant d'un renfort (43 ; 44 ; 45 ; 46) porté par le châssis (13 ; 14 ; 15 ; 16), **caractérisé en ce que** l'orifice (465) est formé par une zone frangible dudit renfort (43 ; 44 ; 45 ; 46).

2. Véhicule selon la revendication 1, **caractérisé en ce que** l'extrémité saillante (51) est formée par l'extrémité avant d'une tige métallique (5), ladite extrémité saillante (51) est positionnée en saillie de l'extrémité avant (322) du bras de suspension (32).

3. Véhicule selon l'une quelconque des revendications précédentes, **caractérisé en ce que** les moyens de blocage comportent des parois latérales adaptés (433 ; 443 ; 464) pour former des surfaces d'appui latérales à la partie avant (322) du bras de suspension (32) lors dudit choc.

4. Véhicule selon la revendication précédente, **caractérisé en ce que** lesdites parois latérales (433 ; 443 ; 464) sont portées par le renfort (43 ; 44 ; 45 ; 46) ou par le châssis.

5. Véhicule selon l'une quelconque des revendications précédentes, **caractérisé en ce que** le renfort (43 ; 44 ; 45) comporte une partie affaiblie (446 ; 453) adaptée pour se déformer lors dudit choc.

6. Véhicule selon la revendication précédente, **caractérisé en ce que** ladite partie affaiblie (446 ; 453) comporte des ouvertures (453) ou des ondulations (446) alignées selon la direction longitudinale (x) du véhicule.

## Patentansprüche

1. Fahrzeug (1) mit einem Fahrgestell (13; 14. 15. 16), an dem ein hinterer Zug (3) mit verformbarem Querträger (31) befestigt ist, wobei der hintere Zug (3) auf jeder Seite des verformbaren Querträgers (31) einen Längsaufhängungsarm (32) aufweist, der im hinteren Teil (321) eine Radnabe (33) und im vorderen Teil (322) ein Gelenk aufweist, wobei das Gelenk (34) das Gelenk (3) ist, 34) zum Verbinden des vorderen Teils (322) des Aufhängungsarms (32) mit dem Rahmen (13); 14. 15. 16) das Fahrgestell (13; 14. 15. 16) mit einem Strukturelement, das in der vorderen Verlängerung des Aufhängungsarms (32) angeordnet ist und dazu geeignet ist, sich nach hinten zu erstrecken und die Längsverschiebung (x) des vorderen Teils (322) des Aufhängungsarms (32) zu begrenzen, wobei eine solche Längsverschiebung bei einem Aufprall auf die Fahrzeugrückseite (1) auftritt, der zum Bruch des Gelenks (34) führt 1) ferner mit Sperrmitteln, die dazu geeignet sind, die Querverschiebung (y) des vorderen Teils (322) des Aufhängungsarms (32) während des Aufpralls zu blockieren, wobei die Sperrmittel ein vorspringendes Ende (51) aufweisen, das von einem vorderen Teil (322) des Aufhängungsarms (32) getragen wird, wobei das vorspringende Ende (51) dazu geeignet ist, um in eine Öffnung (436) einzudringen (43; 44. 45. 46) vom Fahrgestell (13) getragen; 14. 15. 16), **dadurch gekennzeichnet, dass** die Öffnung (465) durch einen zerbrechlichen Bereich der Verstärkung (43; 44. 45. (46).

2. Fahrzeug nach Anspruch 1, **dadurch gekennzeichnet, dass** das vorspringende Ende (51) durch das vordere Ende einer Metallstange (5) gebildet ist, wobei das vorspringende Ende (51) von dem vorderen Ende (322) des Aufhängungsarms (32) vorsteht.

3. Fahrzeug nach einem der vorhergehenden Ansprüche, **dadurch gekennzeichnet, dass** die Blockiermittel angepasste Seitenwände (433; 443; 464) zur Bildung seitlicher Stützflächen am vorderen Teil (322) des Aufhängungsarms (32) beim Aufprall.

4. Fahrzeug nach dem vorhergehenden Anspruch, **dadurch gekennzeichnet, dass** die Seitenwände (433; 443; 464) von der Verstärkung (43; 44. 45. 46) oder durch das Fahrgestell.

5. Fahrzeug nach einem der vorhergehenden Ansprüche, **dadurch gekennzeichnet, dass** die Verstärkung (43; 44. 45) einen geschwächten Teil (446; 453) geeignet, sich während des Aufpralls zu verformen.

6. Fahrzeug nach dem vorhergehenden Anspruch, **dadurch gekennzeichnet, dass** der geschwächte Abschnitt (446; 453) mit in Fahrzeuglängsrichtung (x) fluchtenden Öffnungen (453) oder Wellen (446).

## Claims

1. Vehicle (1) with chassis (13; 14; 15; 16) on which is attached a reverse (3) deformable (31) train, the rear (3) train having on each side of the deformable (31) a longitudinal suspension arm (32) of the type having, in the rear (321), a wheel hub (33) and, in the front (322), a joint (34) (34), so that the front part (322) of the suspension arm (32) can be connected to the chassis (13); 14; 15; 16), the chassis (13; 14; 15; 16) having a structural element positioned in the forward extension of the suspension arm (32) and adapted to extend opposite and limit the longitudinal displacement (x) of the front part (322) of the suspension arm (32), such a longitudinal displacement occurring during a shock on the rear of the vehicle (1) which causes the said articulation to break (34), the vehicle (1) fitted with adequate means of blocking to block the transverse movement (y) of the front (322) part of the suspension arm (32) during that shock, the means of blocking having a protruding end (51) carried by a front (322) part of the suspension arm (32), the protruding end (51) being adapted to penetrate an opening (43 6) corresponding to a reinforcement (43; 44; 45; 46) worn by the chassis (13; 14; 15; 16), characterized as the hole (465) is formed by a free zone of the said reinforcement (43; 44; 45; 46).

2. Vehicle according to Claim 1, **characterized by** the protruding end (51) formed by the front end of a metal rod (5), the protruding end (51) is positioned protruding from the front end (322) of the suspension arm (32).

3. Vehicle in accordance with any of the preceding claims, **characterized by** the use of suitable side walls (433; 443; 464) to form side support surfaces on the front (322) of the suspension arm (32) during the said shock.

4. Vehicle according to the previous claim, characterized as the said side walls (433; 443; 464) are carried by the reinforcement (43; 44; 45; 46) or by the chassis.

5. Vehicle according to any of the previous claims, characterized as reinforcement (43; 44; 45) has a weak part (446; 453) adapted to deform during the said shock.

6. Vehicle according to the previous claim, characterized as the said party weakened (446; 453) has openings (453) or undulations (446) aligned according to the longitudinal direction (x) of the vehicle.
